# EUROPÄISCHE PATENTSCHRIFT

(11) **EP 1 554 546 B1**
(45) Veröffentlichungstag und Bekanntmachung des Hinweises auf die Patenterteilung: **05.06.2013**
(21) Anmeldenummer: 03769445.2
(22) Anmeldetag: 23.10.2003
(51) Int. Cl.: G01D 5/347

(54) **LÄNGENMESSSYSTEM**
LENGTH MEASURING SYSTEM
SYSTEME DE MESURE DE LONGUEUR

(30) Priorität: 25.10.2002 DE 10249884; 25.10.2002 DE 10262008
(43) Veröffentlichungstag der Anmeldung: 20.07.2005
(73) Patentinhaber: Dr. Johannes Heidenhain GmbH, 83301 Traunreut (DE)
(72) Erfinder: FREITAG, Hans-Joachim, 07749 Jena (DE); FRANZ, Heinz-Günther, 22359 Hamburg (DE); SCHMIDT, Andreas, 99089 Erfurt (DE); BÖGE, Ludwig, 07751 Jena-Priessnitz (DE)
(86) Internationale Anmeldenummer: PCT/EP2003/011760
(87) Internationale Veröffentlichungsnummer: WO 2004/038339

(56) Entgegenhaltungen:
- DE-A- 10 204 097
- DE-A- 19 918 654
- DE-A1- 3 527 652
- DE-A1- 19 914 311

## Beschreibung

Die Erfindung bezieht sich auf ein Längenmeßsystem zum Messen von Relativbewegungen zwischen einem ersten und einem zweiten Maschinenteil, mit einem Abtastkopf und einem davon abgefühlten Maßstab, wobei in einer Endmontage des Längenmeßsystems der Abtastkopf fest am ersten Maschinenteil anbringbar und der Maßstab mit dem zweiten Maschinenteil verbindbar ist. Die Erfindung bezieht sich weiter auf ein Verfahren zur Endmontage eines solchen Längenmeßsystems.

Längenmeßsysteme zum Messen von Relativbewegungen zwischen einem ersten und einem zweiten Maschinenteil sind bekannt und werden bei Werkzeugmaschinen häufig eingesetzt, beispielsweise um die Bewegung eines Maschinenkopfes oder -schlittens gegenüber einem Maschinenbett zu erfassen. Üblicherweise wird dazu ein Maßstab verwendet, der am Maschinenbett befestigt wird. Ein Abtastkopf fühlt den Maßstab ab, wobei dies kontaktfrei ebenso wie kontaktierend erfolgen kann. Der höheren Meßgenauigkeit halber haben sich jedoch optische und damit kontaktfreie Abfühlprinzipien durchgesetzt.

Längenmeßsysteme der genannten Art können in zwei Kategorien unterteilt werden: offene und gekapselte Meßsysteme. Bei offenen Meßsystemen ist der Maßstab offen am Maschinenbett befestigt und der am Maschinenkopf befestigte Abtastkopf bewegt sich über dem Maßstab. Bei gekapselten Meßsystemen liegt der Maßstab in einer geschlossenen Kapsel, in der sich auch der Abtastkopf befindet. Der Abtastkopf läuft dabei auf in der Kapsel liegenden Führungselementen und ist mit einem Mitnehmer mit dem Maschinenkopf verbunden, so daß er sich mit diesem bewegt. Ein gekapseltes Meßsystem ist beispielsweise in der DE 30 20 003 A1 dargestellt.

Gekapselte Meßsysteme erreichen einen höheren Verschmutzungsschutz des Maßstabs und des Abtastkopfes als offene Systeme, erkaufen sich dies jedoch mit einem hohen konstruktiven Aufwand. Gekapselte Meßsysteme sind dementsprechend teurer als offene.

Bei der Montage eines Längenmeßsystems an einer Maschine, beispielsweise einer Werkzeugmaschine, muß eine Anpassung an die jeweiligen Gegebenheiten erfolgen. Die Lagen der Montagestellen für den Maßstab sowie den Abtastkopf können nur innerhalb gewisser Toleranzen spezifiziert werden. Beispielsweise ist eine gewisse Toleranz bezüglich des Winkels gegeben, in dem die Montageflächen für Maßstab und Abtastkopf zueinander liegen. Gekapselte Meßsysteme sind hier im Vorteil, da der Abtastkopf aufgrund der Führung in der Kapsel nicht unmittelbar, sondern über einen relativ leicht modifizierbaren Mitnehmer mit dem Maschinenkopf verbunden ist. Dieser Mitnehmer muß möglichst wenig Spiel in der Meßrichtung aufweisen. In den anderen Richtungen, insbesondere entlang der Mitnehmerachse ist schon deshalb eine gewisse Flexibilität gegeben, da durch die Führung in der Kapsel der Abstand zwischen dem Maschinenkopf und der Führung in der Kapsel entlang der zu erfassenden Meßstrecke etwas variieren kann.

Ein gekapseltes Längenmeßsystem, bei dem die Zuordnung zwischen dem Abtastkopf und dem Profil mittels einer Transportsicherung gewährleistet ist, ist in der DE 199 18 654 A1 beschrieben.

Die DE 35 27 652 A1 offenbart ein gekapseltes Längenmeßsystem und ein Verfahren zur Ausrichtung des Profilteils eines gekapselten Längenmeßsystems. Dabei ist während des Ausrichtens der Abtastkopf mit einem beweglichen Maschinenteil gekoppelt, das mittels einer Montagelehre durch Relativbewegung in Messrichtung das Profilteil ausrichtet.

Bei offenen Systemen, deren Abtastkopf in der Regel fest am Maschinenkopf angebracht ist, ist diese Flexibilität nicht gegeben, weshalb hier eine höhere Genauigkeit an die gegenseitige Lage der Montageflächen für Abtastkopf und Maßstab gefordert ist. Dies erschwert die Endmontage.

Die DE 199 14 311 A1 zeigt ein derartiges offenes Längenmeßsystem mit einer Vorrichtung zum gerichteten Anbringen eines Maßstabes oder eines Maßstabträgers an eine Anbaufläche.

Der Erfindung liegt die Aufgabe zugrunde, ein Längenmeßsystem zu schaffen, bei dem eine einfache Montage möglich wird. Weiter sollte ein verbesserter Schutz von Abtastkopf und Maßstab mit vermindertem technischen Aufwand erreicht werden.

Diese Aufgabe wird erfindungsgemäß durch ein Längenmeßsystem gemäß dem Patentanspruch 1 gelöst.

Zusätzlich kann vorgesehen sein ein Längenmeßsystem zum Messen von Relativbewegungen zwischen einem ersten und einem zweiten Maschinenteil, mit einem Abtastkopf und einem davon abgefühlte Maßstab, wobei in einer Endmontage des Längenmeßsystems der Abtastkopf fest am ersten Maschinenteil anbringbar und der Maßstab mit dem zweiten Maschinenteil verbindbar ist, gelöst, bei dem der Maßstab in einem Profilteil befestigt ist, das in der Endmontage fest am zweiten Maschinenteil anbringbar ist und in das der Abtastkopf einsteht, wobei der Abtastkopf in einem zur Endmontage vorbereiteten Zustand über ein entfernbares Montageelement vorjustiert und lösbar mit den Profilteil verbunden ist oder der Abtastkopf im endmontierten Zustand in das Profilteil einsteht, ohne sich daran abzustützen.

Die Aufgabe wird erfindungsgemäß im Sinne einer vereinfachten Montage bei einem Längenmeßsystem der genannten Art durch das Verfahren mit den Merkmalen des Patentanspruchs 4 gelöst.

Dabei ist es möglich, daß zur Endmontage das Profilteil am zweiten Maschinenteil ausgerichtet und befestigt wird, der Abtastkopf am ersten Maschinenteil spaltfüllend fest angebracht wird und dann zum Lösen der Verbindung von Profilteil und Abtastkopf das Montageelement entfernt wird.

Es kann ein Profilteil eingesetzt werden, das nicht nur schützende Funktionen für den Maßstab hat, sondern auch den Abtastkopf, insbesondere im Bereich, in dem optische Elemente liegen, umgibt. Der Abtastkopf ist dabei fest am Maschinenteil angebracht, so daß er keinen Führungskontakt mit dem Profilteil benötigt. Das Profilteil kann also diesbezüglich einfacher ausgebildet werden und muß den Abtastkopf nicht führen. Dieser folgt lediglich der Bewegung des ersten Maschinenteils, an dem er fest angebracht ist.

Die Ausrichtung von Abtastkopf und Maßstab wird in montierten Zustand durch entsprechende Justage des Profilteils, das den Maßstab enthält, zum Abtastkopf erreicht. Die vorgegebene Bewegung zwischen dem ersten Maschinenteil, das den Abtastkopf trägt, und dem den Maßstab tragenden Profilteil, das am zweiten Maschinenteil befestigt ist, sorgt im endmontierten Zustand automatisch für die korrekte Lage zwischen Abtastkopf und Maßstab, wie sie für eine genaue Messung erforderlich ist.

Vor der Endmontage wird dieser justierte Zustand durch ein entfernbares Montageelement gesichert, das den Abtastkopf mit dem Profilteil lösbar verbindet.

Die Befestigung des Profilteils am zweiten Maschinenteil erfolgt beim erfindungsgemäßen Längenmeßsystem zweckmäßigerweise dann, wenn Abtastkopf und Profilteil noch miteinander verbunden sind. Dabei kommen insbesondere form- oder stoffschlüssige Verbindungen in Frage, wobei eine stoffschlüssige Verbindung in Form einer Verklebung den Vorteil hat, daß sie auch von ungeschultem Personal bei der Befestigung des Längenmeßsystems an einer Maschine vorgenommen werden kann. Es ist deshalb bevorzugt, daß das Profilteil eine Klebefläche aufweist, an der es mit dem zweiten Maschinenteil verklebbar ist.

Das Profilteil schützt den Maßstab. Weiter hat es auch eine gewisse Schutzfunktion für den Abtastkopf. Diesbezüglich ist es bevorzugt, daß das Profilteil U-förmig mit zwei Schenkeln profiliert ist, wobei einer der Schenkel am zweiten Maschinenteil angebracht ist und an seiner Innenseite den Maßstab trägt und der andere der Schenkel den Abtastkopf während der Messung berührungslos umgreift.

Der den Maßstab kontaktlos umgreifende Abtastkopf steht in der Regel tief in das Profilteil ein, wodurch er besonders gut geschützt ist. Insbesondere die freiliegenden optischen Bauteile des Abtastkopfes liegen dann vorzugsweise im Profilteil. Dies mindert die Gefahr mechanischer Beschädigungen des Abtastkopfes. Zusätzlich ist die Verschmutzungsgefahr für den Maßstab stark herabgesetzt, da er sich im Inneren des U-förmigen Profilteils und in einem Meßspalt des Abtastkopfes befindet. Das Profilteil ist in dieser Ausführungsform in Art eines Kapselprofils oder einer U-förmigen Schiene ausgebildet, in deren Inneren der Maßstab sitzt.

Bei dieser Ausführungsform kann darüberhinaus der Abtastkopf auf einfache Weise mit dem Profilteil verbunden werden, indem eine Verbindung zwischen den zwei Schenkeln des Profilteils und dem Abtastkopf eingerichtet wird. Dieses bewerkstelligende Montageelemente haben darüber hinaus den Vorteil, daß der im Inneren des Profilteils liegende Maßstab vom Montageelement, das den vorjustierten Zustand sichert, nicht beeinträchtigt werden kann.

Für das Montageelement kommt jede geeignete form- oder kraftschlüssige Befestigung in Frage, die eine starre Verbindung zwischen Abtastkopf und Profilteil im vorjustierten Zustand sicherstellt und die unter Beibehaltung des vorjustierten Zustandes lösbar ist. Ein besonders einfach und dennoch hochpräzise ausgebildetes Montageelement liegt in Form zweier im Querschnitt zylindrischer Abstandshalter vor, die von den Schenkeln des Profilteils in Nuten des Abtastkopfes gespannt sind. Diesbezüglich ist es zweckmäßig, das Profilteil mit einem federnden Abschnitt auszubilden, der für die entsprechende Spannkraft sorgt. Solche Abstandshalter können dann ohne Werkzeug auf einfach Weise durch Herausziehen zum Lösen der Verbindung zwischen Abtastkopf und Profilteil entnommen werden. Durch den Querschnitt der Abstandshalter und die vom Profilteil ausgeübte Spannkraft kann darüber hinaus die gewünschte Justierung zwischen Abtastkopf und Profilteil sehr präzise eingestellt werden.

Das Profilteil wird in einer vorzugsweisen Ausgestaltung direkt am zweiten Maschinenteil befestigt. Die Lage des Maßstabs im Profilteil ist somit ausschlaggebend für die Orientierung des Maßstabs zum zweiten Maschinenteil. Eine hochpräzise Ausrichtung des Maßstabs im Profilteil ist somit der Meßgenauigkeit förderlich. Diesbezüglich ist es deshalb bevorzugt, daß das Profilteil eine den Maßstab ausrichtende Referenzfläche aufweist, an welcher der Maßstab im befestigten Zustand anliegt. Eine besonders genaue Ausrichtung wird bei der Verwendung zweier Referenzflächen erreicht, die in einem Winkel zueinander (vorzugsweise 90°) liegen. Die Referenzflächen richten den Maßstab im Profilteil aus.

Da mitunter für den Maßstab und das Profilteil unterschiedliche Materialien verwendet werden, ist es vorteilhaft, thermische Spannungen zwischen Maßstab und Profilteil auszugleichen und gleichzeitig für eine sichere Anlage des Maßstabs an der ausrichtenden Referenzfläche zu sorgen. Dies kann besonders einfach durch eine Spannvorrichtung erreicht werden, die den Maßstab in Richtung auf die Referenzfläche verspannt. Als Spannvorrichtung kommt beispielsweise eine Federvorrichtung oder ein geeignetes elastisches Mittel, wie beispielsweise eine Gummischnur in Frage.

Der Abtastkopf ist durch das Einstehen in das Profilteil vor Verschmutzungen geschützt. Er fühlt den im Profilteil liegenden Maßstab kontaktlos ab. Für eine optische Abtastung, bei der Strahlung durch den Maßstab geleitet wird, ist es bevorzugt, daß der in das Profilteil einstehende Abtastkopf den dort befestigten Maßstab während der Messung dreiseitig und kontaktlos umgreift. Durch dieses dreiseitige Umgreifen ist nicht nur eine optische Transparenzmessung am Maßstab möglich, die für eine hohe Meßgenauigkeit bekannt ist, es ist auch zugleich ein noch weitergehender Verschmutzungsschutz für die optischen Elemente des Abtastkopfes gegeben, da diese dann an den Flanken eines Meßspaltes liegen, in den der Maßstab berührungslos einsteht. Ein Verschmutzen der optischen Baugruppen ist damit stark vermindert.

Das erfindungsgemäße Längenmeßsystem läßt sich besonders einfach montieren, indem zuerst das Profilteil am zweiten Maschinenteil ausgerichtet und befestigt wird und dann der Abtastkopf am zweiten Maschinenteil spaltfüllend befestigt wird. Die Ausrichtung des Profilteils sollte dabei so erfolgen, daß unter der Relativbewegung von erstem und zweitem Maschinenteil die vorbestimmte Justierung zwischen Abtastkopf und Maßstab beibehalten bleibt, wenn der Abtastkopf vom ersten Maschinenteil geführt wird.

Durch die vorgegebene Relativbewegung der beiden Maschinenteile und der festgelegten Justierpositionen von Profilteil und Abtastkopf ist eine Überbestimmung der Bauteile gegeben, die grundsätzlich in einem in der Regel keilförmig verlaufenden Spalt zwischen einer Montagefläche des Abtastkopfes und dem ersten Maschinenteil resultiert. Diese Überbestimmungsproblematik wird dadurch behoben, daß der Abtastkopf am ersten Maschinenteil spaltfüllend angebracht wird, beispielsweise durch eine Klebung oder durch entsprechend einstellbare Ausgleichstücke.

Die Ausrichtung des Profilteils entlang der Längsachse der Relativbewegung, d.h. in konstantem Abstand zum ersten Maschinenteil ist wesentlich dafür, daß der am ersten Maschinenteil zu befestigende Abtastkopf und der Maßstab immer die ideale, einen möglichst geringen Meßfehler bedingende Lange zueinander haben. Es ist deshalb zur Befestigung bevorzugt, daß das Profilteil zur Längsachse der Relativbewegung grob ausgerichtet wird und dann mittels einer Lehre entlang der Längsachse in konstantem Abstand zum ersten Maschinenteil justiert wird, wobei erstes und zweites Maschinenteil zur Einjustierung des konstanten Abstandes gegeneinander bewegt werden. Durch dieses Vorgehen ist sichergestellt, daß der Abtastkopf auch nach Befestigung am ersten Maschinenteil immer in vorbestimmter Lage zum Maßstab liegt.

Da der Abtastkopf am ersten Maschinenteil spaltfüllend befestigt wird, ist es zweckmäßig, mittels der Lehre einen vorbestimmten Spalt zwischen ersten Maschinenteil und Abtastkopf vor der Anbringung des Abtastkopfes am ersten Maschinenteil einzustellen. Die spaltfüllende Befestigung füllt dann diesen vorbestimmten Spalt sowie etwaige durch Toleranzen bedingte Abweichungen aus.

Als spaltfüllende Befestigung kommt dabei eine Klebung in Frage. Gleiches gilt für die Befestigung des Profilteils.

Vorteilhaft ist diesbezüglich ein Meßsystem mit einem als Abtastkopf ausgebildeten Bauteil, das mit einer Montagefläche unter Verwendung eines Klebstoffs an einem Maschinenteil befestigbar ist und das aufweist eine Montageplatte, die am Maschinenteil lösbar befestigbar ist und die mit der Montagefläche ein Klebvolumen begrenzt, in das der Klebstoff von oben einfüllbar ist, wobei das Klebvolumen unten und jeweils an den Seiten zwischen Bauteil und Montageplatte für den Klebstoff abgedichtet umgrenzt ist. Die Aufgabe wird weiter mit einem Verfahren zum Befestigen des Bauteils eines solchen Meßsystems am Maschinenteil gelöst, wobei das Bauteil in eine vorbestimmte Stellung am Maschinenteil justiert und dort fest angebracht wird, gelöst, indem daß nach Einjustieren in die vorbestimmte Stellung die Montageplatte fest am Maschinenteil angebracht und dann Klebstoff in das Klebvolumen eingefüllt wird, um das Bauteil fest mit der Montageplatte zu verbinden.

Dann wird also für das Meßsystem eine Montageplatte verwendet, die am Maschinenteil lösbar befestigbar ist und mit der Montagefläche des Bauteils, beispielsweise eines Abtastkopfes, verklebt wird. Die Toleranzanforderungen an die Montagefläche am Maschinenteil sind damit deutlich reduziert, eventuelle Abweichungen die beispielsweise einen keilförmigen Spalt an der Montagefläche des Abtastkopfes zur Folge haben könnten, werden durch die Klebung ausgeglichen. Das zwischen der Montageplatte und der Montagefläche gebildete Klebvolumen erlaubt eine spaltfüllende Befestigung des Bauteils am Maschinenteil, so daß die Befestigung des Bauteils keine negativen Auswirkungen auf dessen einjustierte Stellung hat; dies insbesondere, da die Befestigung spannungsfrei durch Auffüllen des Klebvolumens mit Klebstoff erfolgen kann.

Durch den Einsatz der Montageplatte am Meßsystem ist darüber hinaus eine definierte Materialpaarung zwischen Montageplatte einerseits und Montagefläche andererseits gewährleistet. Die Qualität der Verklebung wird dadurch gesteigert. Darüber hinaus ist eine größere Freiheit bei der Wahl des Klebstoffes gegeben, und das Klebvolumen kann hinsichtlich Gestaltung und Größe optimal für einen Klebstoff gestaltet werden.

Die Montageplatte ist lösbar am Maschinenteil befestigt. Es ist somit möglich, das Bauteil auch nach der Verklebung vom Maschinenteil zu lösen. Bei einer Klebung ohne Montageplatte wäre dies nicht möglich.

Als weiterer Vorteil muß keine Klebefläche am Maschinenteil vorbereitet werden, was insbesondere bei Werkzeugmaschinen oft schwierig ist, da Verschmutzungen durch Ölreste in der Regel unvermeidlich sind. Auch muß die Klebung nicht mehr von speziell geschulten Personal vorgenommen werden. Die Begrenzung des Klebevolumens verhindert, daß Klebstoff vor den Aushärten aus dem Spalt zwischen Montageplatte und Montagefläche herausläuft, was einerseits zu Verschmutzungen und andererseits zu einer nicht beherrschbaren Klebstoffmenge im Klebspalt führen würde. Zur Begrenzung ist jedes Mittel geeignet, das ein Herauslaufen des Klebstoffes verhindert. Der Begriff "abgedichtet" ist somit auf die Viskosität und die Fließeigenschaften des Klebstoffes bezogen zu verstehen. Die Dichtheit muß bezüglich des einzufüllenden Klebstoffes gewährleistet sein.

Eine besonders einfache Dichtung kann erreicht werden, wenn die Montageplatte oder die Montagefläche des Bauteils eine vorstehende Struktur aufweist, die zwischen der Montagefläche und der Montageplatte das Klebevolumen abdichtet.

In den meisten Fällen ist die Montagefläche des Bauteiles in etwa rechteckig. Für solche Fälle ist es zweckmäßig, daß die vorstehende Struktur, die die Dichtung erreicht, U-förmig verläuft. Dann kann an der Oberseite des "U" der Klebstoff eingefüllt werden.

Die abdichtende Umgrenzung des Klebevolumens muß auch bei Variationen des Spaltes zwischen Montageplatte und Montagefläche gewährleistet sein. Solche Variationen können durch Toleranzen bezüglich der Befestigungsfläche am Maschinenteil bedingt sein. Diesbezüglich sind beispielsweise elastische Dichtmittel, die auch bei einer gewissen Variation des Klebespaltes immer noch ausreichend für den Klebstoff abdichtend wirken, denkbar. Eine besonders große Unempfindlichkeit gegen Klebespaltvariationen erreicht man durch eine Ausnehmung an der Montagefläche oder der Montageplatte, in die die vorstehende Struktur zum Abdichten einsteht. Mit dieser Bauweise können besonders große Toleranzen für die Befestigungsfläche am Maschinenteil zugelassen werden.

Es ist deshalb zu bevorzugen, daß die vorstehende Struktur ein Dichtmittel, beispielsweise ein Metallsteg, eine metallische oder nichtmetallische, insbesondere eine elastomere Dichtung ist. Eine gute Befestigung für ein solches Dichtmittel ergibt sich, wenn eine Vertiefung vorgesehen ist, in die das Dichtmittel eingelegt ist. Es ist diesbezüglich deshalb bevorzugt, daß die vorstehende Struktur ein in eine Vertiefung eingelegtes Dichtmittel aufweist.

Das Einfüllen des Klebstoffs in den das Klebevolumen bildende Spalt erfolgt von oben her in das Klebvolumen, das in den meisten Fällen als Klebetasche ausgebildet sein wird.

Da für viele mechanische Anwendungen ein Klebespalt mit einem Spaltabstand im Bereich weniger Zehntel Millimeter vorliegt, ist es zweckmäßig, ein Hilfsmittel zum Einfüllen des Klebstoffes vorzusehen, damit das Einfüllen vereinfacht und auch von Hilfspersonal durchgeführt werden kann. Es ist deshalb zu bevorzugen, daß die Montageplatte einen das Klebevolumen von oben speisenden Einfülltrichter aufweist. Idealerweise wirkt dieser Einfülltichter mit einer Einlaufschräge am Bauteil zusammen, so daß durch einfaches Einfüllen die gesamte Klebstoffmenge unmittelbar in das Klebevolumen gelangt.

Die lösbare Befestigung der Montageplatte ermöglicht, wie bereits erwähnt, ein nachträgliches Abnehmen des Bauteils vom Maschinenteil. Diesbezüglich kommt jede form- oder kraftschlüssige Verbindung in Frage. Besonders bevorzugt ist es, daß die Montageplatte bei lösbaren Befestigungen am Maschinenteil außerhalb des Volumens ein oder mehrere Befestigungslöcher aufweist.

Bei Meßsystemen wird in der Regel das Bauteil, z.B. ein Abtastkopf eines Längenmeßsystems, zuerst in eine vorbestimmte Lage justiert und dann am Maschinenteil, beispielsweise eine Maschinenkopf einer Werkzeugmaschine, befestigt. Beim Einstellen der justierten Lage muß natürlich die Dicke der Montageplatte berücksichtigt werden. Es ist diesbezüglich von Vorteil, wenn die Montageplatte während des Einjustierens am Bauteil an der Montagefläche gehalten wird. Gleiches gilt für den Transport eines Bauteils eines Meßsystems bis zur Endmontage. Es ist deshalb bevorzugt, daß das Meßsystem Haltemittel aufweist, die insbesondere als Transportsicherung dienen und mit denen die Montageplatte abnehmbar am Bauteil gehalten ist.

Das Meßsystem kann auf einfach Weise am Maschinenteil angebracht werden, indem zuerst das Bauteil justiert, dann die Montageplatte angebracht und anschließend die Verklebung zwischen Montageplatte und Bauteil vorgenommen wird. Damit ist eine spannungsfreie Montage des Bauteils sichergestellt, wodurch die justierte Lage bei der Endmontage sicher beibehalten bleibt.

Besonders einfach ist dieses Montageverfahren, wenn die Montageplatte bereits bei der Einjustierung des Bauteils an der Montagefläche des Bauteils gehalten ist. Es muß dann lediglich die Montageplatte am Maschinenteil befestigt werden. Der nach Einstellen der justierten Stellung zwischen Montageplatte und Maschinenteil bestehende Spalt wird dadurch zwischen Montageplatte und Montagefläche des Bauteils verlagert, so daß sich der gewünschte Klebespalt für das Klebvolumen beziehungsweise die Klebetasche ergibt.

Die Erfindung wird nachfolgend unter Bezugnahme auf die Zeichnung beispielshalber noch näher erläutert. In der Zeichnungen zeigt:
- Fig. 1: eine schematische Schnittdarstellung eines Maßstabs einer Linear-Meßvorrichtung mit einem schützenden Kapselprofil, wobei die Figur den Zusammenbau veranschaulicht,
- Fig. 2: die zusammengebaute Einheit der Figur 1,
- Fig. 3: den Einbau eines Abtastkopfes in das Kapselprofil der Figur 2,
- Fig. 4-7: eine schematische Darstellung der Endmontage eines aus Abtastkopf und Kapselprofil gebildeten Meßsystems an einer Maschine in einzelnen Schritten des Befestigungsverfahrens,
- Fig. 8: eine bei der Endmontage verwendete Montagelehre,
- Fig. 9: eine Schnittdarstellung durch das Meßsystem des in Figur 7 gezeigten Zustandes der Befestigung vor dem letzten Befestigungsschritt,
- Fig. 10: das in Figur 9 gezeigte Meßsystem nach Ausführung der Endmontage,
- Fig. 11: eine perspektivische Darstellung einer Montageplatte, die zur Befestigung des Abtastkopfes verwendet wird,
- Fig. 12: eine perspektivische Darstellung des Abtastkopfes,
- Fig. 13: eine perspektivische Darstellung des Abtastkopfes beim Verbinden mit der Montageplatte und
- Fig. 14: eine perspektivische Darstellung des Meßsystems kurz vor Inbetriebnahme.

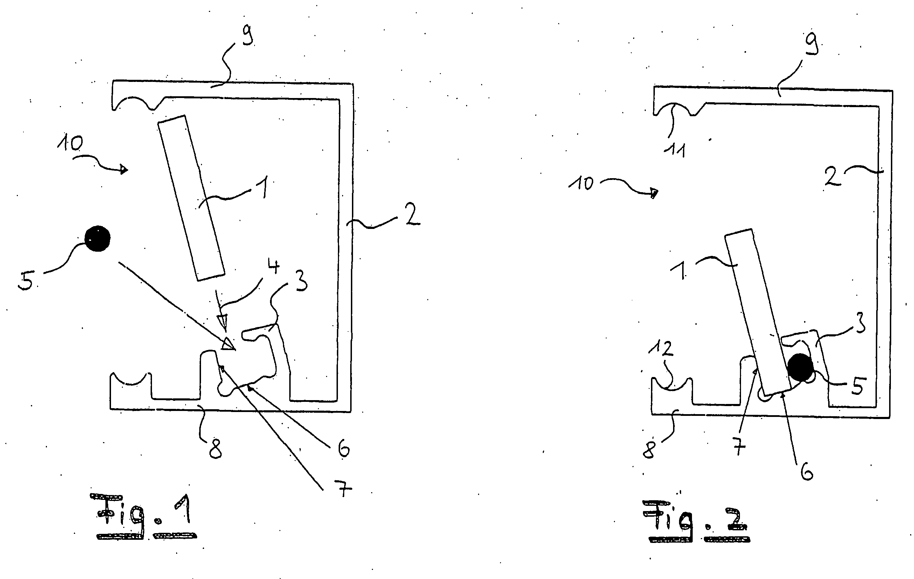

Figur 1 zeigt eine Schnittdarstellung durch einen Maßstab 1 eines Längenmeßsystems, das an einer Werkzeugmaschine zum Einsatz kommt, um die Relativbewegung eines Maschinenkopfes gegenüber einem Maschinenbett zu erfassen. Der Maßstab 1 ist in ein Kapselprofil 2 eingesetzt, das den Maßstabs 1 zum Schutz dreiseitig umgibt.

Im Inneren des Kapselprofils 2 ist zum Befestigen des Maßstabes 1 eine Aufnahme 3 vorgesehen, in die der Maßstab 1 eingesetzt wird (Pfeil 4). In die Aufnahme 3 wird eine Gummischnur 5 eingelegt, die als Spannmittel wirkt, um den Maßstab 1 in der Aufnahme 3 zu sichern. Da der Maßstab 1 im Meßvorgang später abgefühlt wird (er weist dazu eine geeignete Strukturierung auf) und dessen Lage damit für eine genaue Messung wichtig ist, verfügt die Aufnahme 3 über eine untere Referenzfläche 6 sowie eine seitliche Referenzfläche 7, die den Maßstab 1 in exakter Lage im Kapselprofil 2 ausrichten, wenn die als Spannmittel dienende Gummischnur 5 den Maßstab 2 auf die Referenzflächen drückt.

Das Kapselprofil 2 hat U-förmigen Querschnitt mit einer Basis 8 sowie einem Deckel 9. Dadurch, daß das Kapselprofil 2 den Maßstab 1 dreiseitig umgibt, ist ein guter Schutz des empfindlichen Maßstabs 1 gegeben. Die abgefühlte Struktur des Maßstabs 1 liegt an der in der Einbaulage nach unten weisenden Schrägfläche des Maßstabes 1, wodurch Staubablagerungen weiter vermindert werden. Die Basis 8 des Kapselprofils 2 ist zur Befestigung am Maschinenbett einer Werkzeugmaschine ausgebildet.

Figur 2 zeigt den Maßstab 1 in das Kapselprofil 2 eingebaut. Es ist gut zu erkennen, daß der Maßstab 1 im Kapselprofil 2 nur durch eine Öffnung 10 zugänglich ist. Natürlich handelt es sich bei der Öffnung 10 um einen Schlitz, da der Maßstab 1 sich senkrecht zur Zeichenebene erstreckt, ebenso wie das Kapselprofil 2, das beispielsweise aus einem geeignet profilierten Aluminiumstrang hergestellt ist.

Die Schenkel des Kapselprofils 2, d.h. die Basis 8 und der Deckel 9, weisen Haltenuten auf, so daß im Deckel 9 eine obere Haltenut 11 und in der Basis 8 eine untere Haltenut 12 gebildet ist. Diese Haltenuten 11, 12 dienen in Kombination mit einer gewissen Elastizität des Deckels 9 zum Sichern eines in das Kapselprofil eingesetzten Abtastkopfes, was später noch erläutert werden wird.

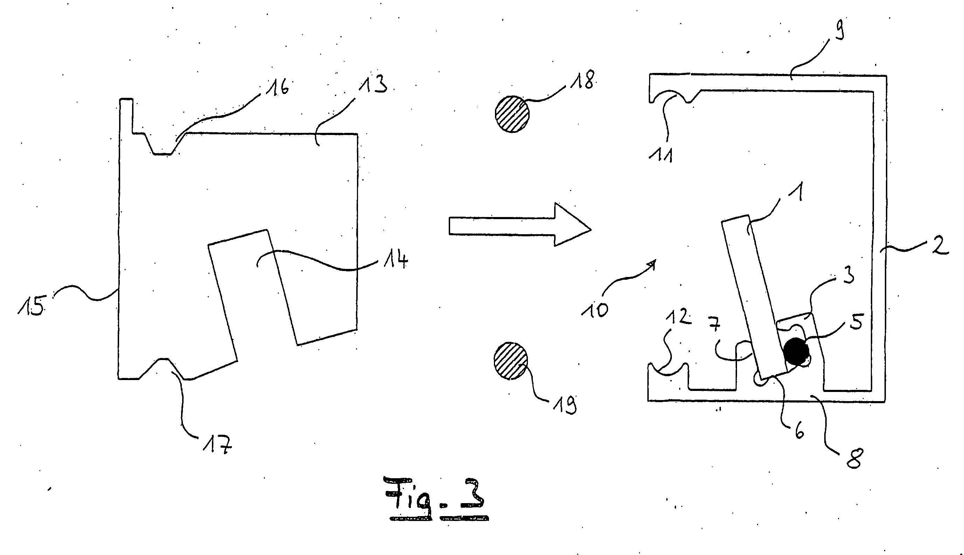

Der Abtastkopf 13 ist in Figur 3 schematisch dargestellt. Er weist einen Meßspalt 14 auf, der im zusammengebauten Zustand den Maßstab 1 dreiseitig berührungslos umgibt und an dem die (nicht dargestellten) Meßmittel angeordnet sind, die die (ebenfalls nicht dargestellte) Struktur am Maßstab 1 kontaktlos abfühlen.

Der Abtastkopf 13 hat eine Montagefläche 15, mit der er am Maschinenkopf der Werkzeugmaschine fest angebracht wird. Weiter verfügt der Abtastkopf 13 über eine obere Nut 16 sowie eine untere Nut 17, die mit den Haltenuten 11 und 12 in den Schenkeln des Kapselprofils 2 so zusammenwirken, daß eine Transportsicherung von zusammengebautem Kapselprofil 2 mit Maßstab 1 und Abtastkopf 13 gewährleistet ist, wobei der Abtastkopf 13 und der Maßstab 1 in vorbestimmter, justierter Stellung zueinander gesichert sind.

Dazu sind ein oberer Paßzylinder 18 und ein unterer Paßzylinder 19 vorgesehen, deren Durchmesser so bemessen ist, daß sie in die obere Haltenut 11 beziehungsweise die untere Haltenut 12 eingelegt durch die federnde Wirkung des Deckels 9 in der Nut 16 bzw. 17 festliegen, wenn der Abtastkopf 13 in das Kapselprofil 1 eingesetzt ist. Die Paßzylinder 18 und 19 können beispielsweise als geeignete Stahldrähte ausgebildet sein.

Der Einsetzvorgang ist in Figur 3 durch einen Pfeil schematisch dargestellt, wobei natürlich nach dem Zusammenbau von Maßstab 1 und Kapselprofil 2 ein Einfädeln des Maßstabes 1 in den Meßspalt 14 des Abtastkopfes 13 durch eine Bewegung senkrecht zur Zeichenebene erfolgt. D.h., der Abtastkopf 13 wird an einem offenen Ende des Kapselprofils 2 über den Maßstab 1 geschoben. Danach wird der Paßzylinder 18 bzw. 19 in den von der oberen Haltenut 11 und der oberen Nut 16 beziehungsweise in den von der unteren Haltenut 12 und der unteren Nut 17 gebildeten Spalt eingeführt. Durch die federnde Wirkung des den Deckel 9 bildenden Schenkels des Kapselprofils 2 werden die Paßzylinder eingeklemmt. Das Kapselprofil 2 hält den Abtastkopf 13 fest zwischen der Basis 8 und dem Deckel 9, und es ist eine vorbestimmte, innerhalb enger, genau bemessener Toleranzen gegebene Orientierung des Abtastkopfes 13 zum Maßstab 1 gegeben.

Die derart vormontierte Einheit aus Abtastkopf 13, Kapselprofil 2 und Maßstab 1 kann dann einfach an der Maschine angebaut werden, indem Abtastkopf 13 und Kapselprofil 2 am Maschinenkopf beziehungsweise Maschinenbett befestigt werden.

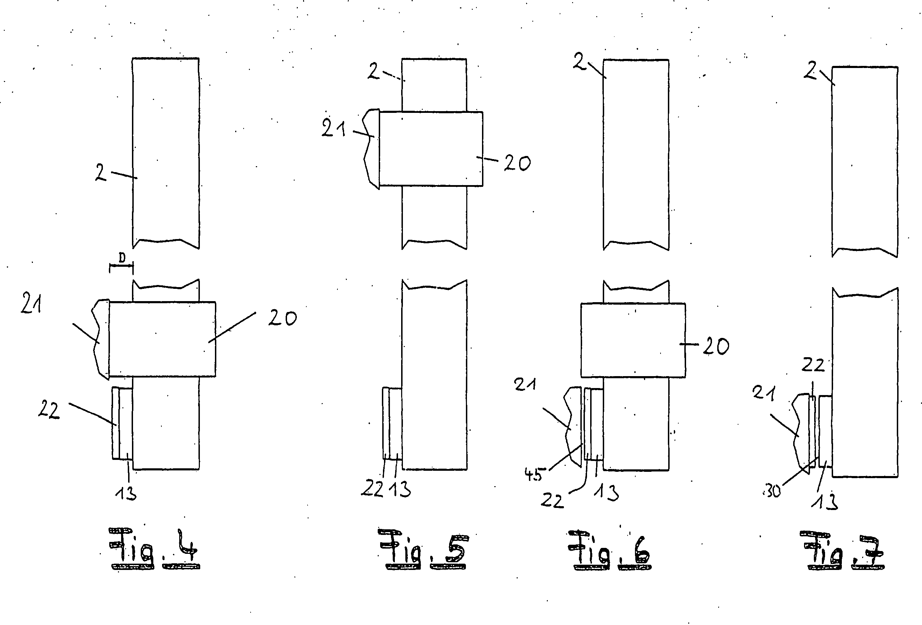

In einer Ausführungsform erfolgt diese Befestigung gemäß den in den Figuren 4 bis 7 dargestellten Schritten. Die Figuren zeigen eine Draufsicht auf die vormontierte Einheit aus Kapselprofil 2, Maßstab 1 und Abtastkopf 13 von oben (bezogen auf Figur 3). Der Abtastkopf 13 ist zur Befestigung an der Montagefläche 15 mit einer Montageplatte 22 versehen, deren Bauweise später noch im Detail erläutert wird. Über die Montageplatte 22 wird der Abtastkopf 13 am Maschinenteil 21 angebracht. Die Montageplatte 22 muß bei der Anbringung des Kapselprofils 2 noch nicht am Abtastkopf 13 vorgesehen sein. Sie wird, wie noch zu erläutern ist, erst für die feste Anbringung des Abtastkopfes 13 am Maschinenkopf 21 benötigt.

Das Kapselprofil 2, in dessen Inneren sich der (in den Figuren 4 bis 7 nicht zu sehen) Maßstab 1 befindet, wird exakt parallel zum Maschinenablauf, d.h. zur Längsbewegung des Maschinenkopfs 1 ausgerichtet. Dazu kommt eine Montagelehre 20 zum Einsatz, die das Kapselprofil 2 in einen vorbestimmten Abstand D zum Maschinenkopf 21 ausrichtet. Durch Bewegen des Maschinenkopfs 21 entlang der Maschinenablaufrichtung wird bei gleichzeitigem Anlegen der Montagelehre 20 eine Justage des Kapselprofils 2 parallel zur Bewegungsrichtung des Maschinenkopfs 21 erreicht. Figur 5 zeigt diesen Vorgang, in dem der Maschinenkopf 21 mit Montagelehre 20 die Ausrichtung des Kapselprofils 2 bewirkt.

Das justierte Kapselprofil 2 wird am Maschinenbett befestigt. Die Befestigung kann auf vielfältige Art und Weise erfolgen. In der hier geschilderten Ausführungsform wird ein zweistufiges Verfahren verwendet, bei dem zuerst eine Grobausrichtung des Kapselprofils 2 zum Maschinenablauf erfolgt. Der Maschinenkopf 21 wird in die entsprechenden (End-)Stellungen bewegt und das Kapselprofil wird an zwei möglichst weit auseinander liegenden Punkten mit der Montagelehre 20 ausgerichtet. Nach dieser Grobausrichtung kann eine erste Fixierung des Kapselprofils 2 erfolgen, beispielsweise indem eine Schraubverbindung locker angezogen wird.

Dann wird der Maschinenkopf 21 mit der Montagelehre 20 langsam entlang des Maschinenablaufes bewegt und gleichzeitig das Kapselprofil 2 fest am (nicht dargestellten) Maschinenbett fixiert. Dies kann in einer Ausführungsform, in der das Kapselprofil 2 verschraubt wird, durch festes Anziehen der Schraubverbindungen erreicht werden. In Ausführungsformen, in denen eine Verklebung des Kapselprofils 2 mit dem Maschinenbett erfolgt, kann die Verklebung schrittweise vorgenommen werden, beispielsweise indem ein geeignetes an der Basis 8 des Kapselprofils 2 angebrachtes Doppelklebeband mit der fortschreitenden Bewegung des Maschinenkopfs 21 von einem Schutzblatt befreit wird, so daß das Kapselprofil 2 fest mit dem Maschinenbett verklebt wird.

Der Abtastkopf 13 mit der daran befestigten Montageplatte 22 ist, wie anhand Figur 3 beschrieben wurde, durch die Paßzylinder 18 und 19 fest mit dem Kapselprofil 2 verbunden. Die Ausrichtung des Kapselprofils 2 parallel zum Ablauf des Maschinenkopfs 21 hat also keinen Einfluß auf die vorjustierte Stellung von Kapselprofil 2 mit Maßstab 1 zu dem Abtastkopf 13.

Ist das Kapselprofil 2 in exakt parallel zum Ablauf des Maschinenkopfs 21 ausgerichteter Stellung am Maschinenbett befestigt (Figur 6), wird der Maschinenkopf 21 zum Abtastkopf 16 gefahren. Es stellt sich dabei zwischen der Montageplatte 22, die an der Montagefläche 15 des Abtastkopfes 13 anliegt, und dem Maschinenkopf 21 ein vorbestimmter Spalt 45 ein. Nun wird die Montageplatte 22, die bislang am Abtastkopf 13 gesichert war, von diesem gelöst und mit dem Maschinenteil 21 verschraubt. Dadurch verlagert sich der Spalt 45, der zuvor zwischen Montageplatte 22 und Maschinenteil 21 bestand, zwischen die Montageplatte 22 und den Abtastkopf 13. Dieser Spalt dient als Klebespalt 30, der dann mit Klebstoff aufgefüllt wird, um den Montagekopf 13 fest an der mit der Montageteil 21 verschraubten Montageplatte 22 anzubringen (vergleiche Figur 7). Der Klebstoff kann dabei spannungsfrei aushärten.

Nach Aushärten des Klebstoffes wird die Verbindung zwischen Montagekopf 13 und Kapselprofil 2 gelöst, indem die Paßzylinder 18 und 19 aus den durch die obere Haltenut 11 und obere Nut 16 sowie untere Haltenut 12 und untere Nut 17 gebildeten Spalten herausgezogen werden.

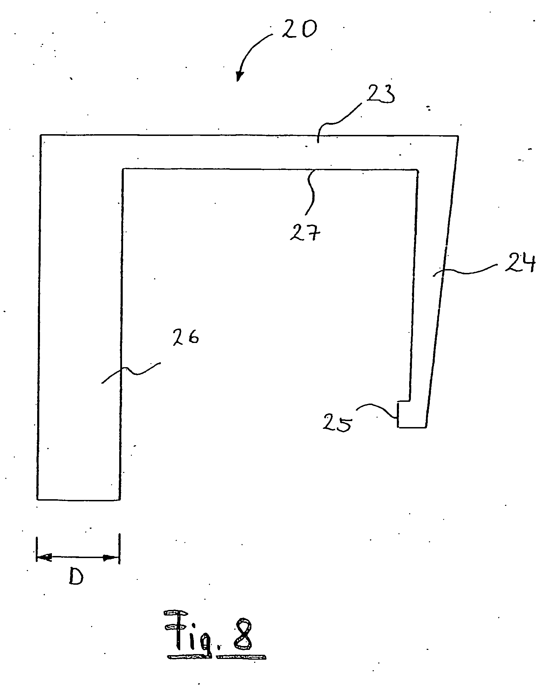

Figur 8 zeigt eine Schnittdarstellung durch die Montagelehre 20. Sie wird über das Kapselprofil 2 gelegt und weist dazu einen ersten Referenzarm sowie einen zweiten Referenzarm 24 auf. Der Referenzarm 24 hat an seiner dem Kapselprofil 2 zugewandten Seite eine Referenzfläche 25, die außen am Kapselprofil 2 etwa auf Höhe des Maßstabes 1 anliegt. Mit einer Auflagefläche 27, die sich an der dem Kapselprofil 1 zugewandten Innenseite des ersten Referenzarmes 23 befindet, liegt die Montagelehre 20 auf dem Deckel 9 des Kapselprofils 2. Ein Einstellarm 26 der Montagelehre 20 sorgt dafür, daß bei auf dem Kapselprofil liegender Montagelehre 20 der gewünschte Abstand D zum Maschinenkopf 21 gegeben ist. Der Einstellarm 26 steht also zwischen den freien Enden des Kapselprofils 2 und dem Maschinenteil 21.

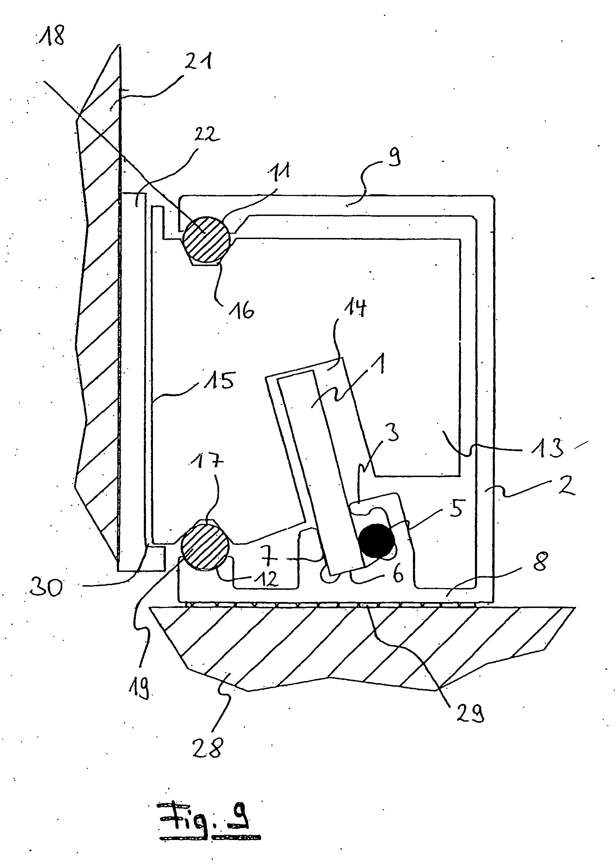

Figur 9 zeigt in einer Schnittdarstellung den Zustand der Befestigung des Meßsystems, wie er in Figur 7 in Draufsicht zu sehen ist. Das Kapselprofil 2 ist dabei mit seiner Basis 8 auf das Maschinenbett 28 geklebt, wozu ein Klebeband 29 mit vorbestimmten Eigenschaften zum Einsatz kommt. Die Montageplatte 22 ist (auf in Figur 9 nicht weiter dargestellte Weise) fest am Maschinenkopf 21 angebracht, wobei das Spaltmaß D, das von der Montagelehre 20 vorgegeben wurde, einen vorbestimmten Klebespalt 30 zwischen der Montagefläche 15 des Abtastkopfes 13 und der Montageplatt 22 bewirkt. Die Montageplatte 22 weist unten einen vorspringenden Randvorsprung auf, der den Klebespalt 30 nach unten begrenzt.

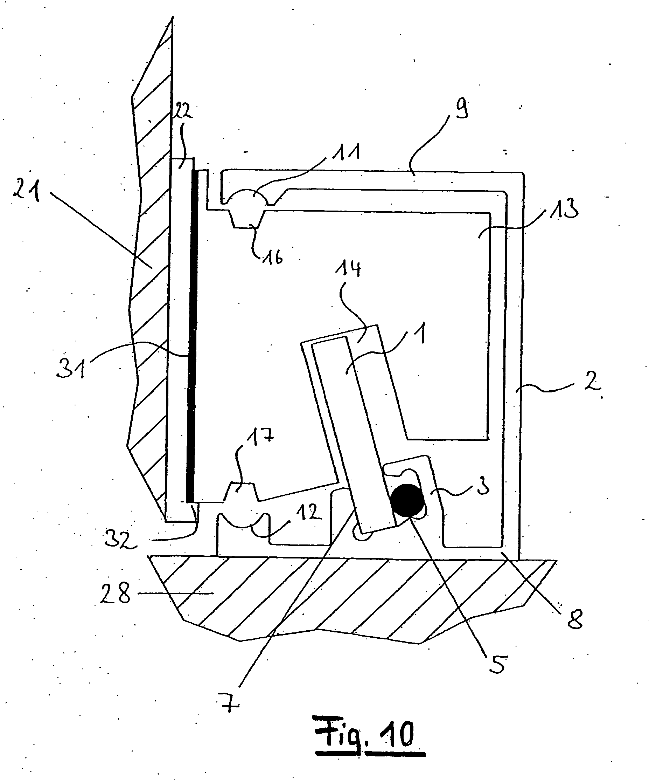

Figur 10 zeigt das Meßsystem nach Abschluß der Montage, wobei das Klebeband 29 zur Vereinfachung nicht dargestellt ist. Der Klebespalt 30 wurde mit Klebstoff 31 aufgefüllt, der wegen des Randvorsprungs 32 an der Unterseite der Montageplatte 22 nicht aus dem Klebespalt 30 herauslaufen konnte. Nach Entnahme des oberen Paßzylinders 18 aus dem Spalt, der von oberer Haltenut 11 und oberer Nut 16 gebildet wurde, sowie des unteren Paßzylinders 19, der aus dem Spalt aus unterer Nut 17 und unterer Haltenut 12 herausgezogen wurde, ist der Abtastkopf 13 frei entlang der (senkrecht zur Zeichenebene liegenden) Ablaufrichtung des Maschinenkopfs 21 bewegbar. Der Abtastkopf 13 steht dabei in das Kapselprofil 2 ein und wird von diesem berührungslos dreiseitig umgeben. Dadurch ist ein guter Schutz des Abtastkopfes 13 gegen Verschmutzung oder mechanische Beschädigung erreicht. Der Abtastkopf 13 umgibt seinerseits dreiseitig den Maßstab 1 und fühlt diesen kontaktlos ab. Durch die Ausrichtung von Kapselprofil 1 und Abtastkopf 13 ist keine Führung des Abtastkopfes 13 im Kapselprofil 2 erforderlich. Der Abtastkopf 13 stützt sich nicht am Kapselprofil 2 oder dem Maßstab 1 ab.

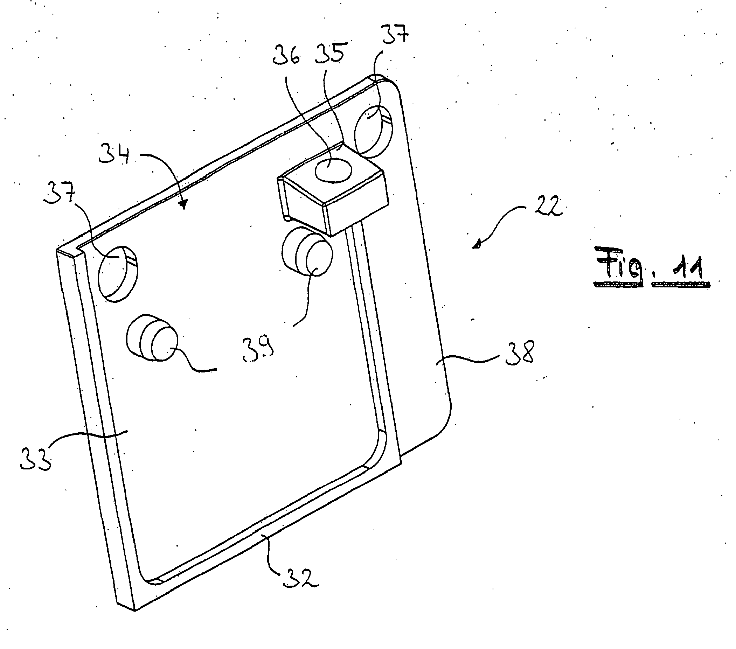

Figur 11 zeigt in perspektivischer Darstellung ein Ausführungsbeispiel für die Montageplatte 22, wobei diejenige Seite im Bild nach rechts weist, an der der Abtastkopf 13 mit der Montagefläche 15 befestigt wird. Die Montageplatte 22 hat einen U-förmig umlaufenden Randvorsprung 32, der als Dichtmittel dient, um ein Herauslaufen des Klebstoffs zu verhindern, der durch eine an der Oberseite zwischen dem Abtastkopf 13 und der Montageplatte 22 gebildete Öffnung 34 eingefüllt wird, um den Abtastkopf 13 an der Montageplatte 22 zu verkleben.

Zum Erleichtern des Einfüllens verfügt die Montageplatte 22 über einen Einfülltrichter 35 mit einer Einfüllöffnung 36, in die aus einer Tülle Klebstoff eingespritzt werden kann. Die Montageplatte 22 hat darüber hinaus zwei Langlöcher 37, die es erlauben, die Montageplatte 22 am Maschinenteil 21 zu verschrauben. Diese Schraubverbindung kann gelöst werden, falls der Abtastkopf 13 nach erfolgter Verklebung wieder vom Maschinenkopf 21 angenommen werden soll. Ohne diese lösbare Verbindung zwischen Montageplatte 22 und Maschinenkopf 21 wäre ein Abnehmen des Abtastkopfes nach erfolgter Verklebung nur sehr aufwendig und mit einer Beschädigungsgefahr für den Maschinenkopf 21 möglich.

Eines der Langlöcher 27 liegt dabei in einem Flansch 38, wodurch eine besonders gute Zugänglichkeit auch nach Verklebung des Abtastkopfes 13 erreicht ist. Die Ausbildung der Löcher als Langlöcher 37 hat darüber hinaus den Vorteil, daß bei den entsprechenden Gewindelöcher am Maschinenkopf 21 größere Toleranzen zugelassen werden können, ohne daß Auswirkungen auf die exakte Montage des Abtastkopfes zu befürchten wären.

Um die Montageplatte 22 am Abtastkopf 13 zu sichern, bis die Befestigung der Montageplatte 22 und die anschließende Verklebung des Abtastkopfes 13 abgeschlossen sind, weist die Montageplatte 22 geeignete Haltenasen 39 auf, die in entsprechende Halteöffnungen am Abtastkopf 13 eingreifen. Dadurch kann die Montageplatte 22 auf den Abtastkopf 13 gesteckt werden und ist bis zum Abschluß der Befestigung gegen Herunterfallen gesichert.

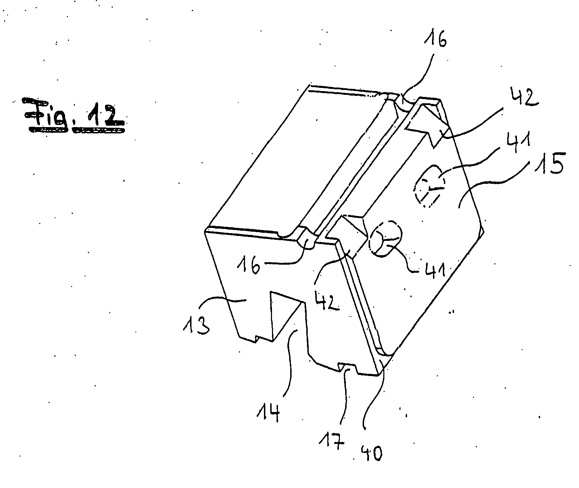

Die Halteöffnungen 42 sind am Abtastkopf 13 in der perspektivischen Darstellung der Figur 12 gut zu erkennen, die den Montagekopf 13 in perspektivischer Darstellung von der Montagefläche 15 her zeigt. Wie zu sehen ist, ist an der Montagefläche 15 eine U-förmige Aussparung 40 vorgesehen, in die der Randvorsprung 32 der Montageplatte 22 einsteht, so daß ein zwischen Montageplatte 22 und Montagefläche 15 gebildete Kleberaum 33, der zur Aufnahme des Klebstoffes 31 dient, unten und seitlich abgedichtet ist. Aufgrund der Viskosität des verwendeten Klebstoffes genügt dabei eine einfache Anlage des Randvorsprunges 32 an der senkrechten Wandfläche, die durch die Aussparung 40 gebildet ist, um die gewünschte Dichtwirkung zu erreichen.

Der Abtastkopf 13 verfügt zum leichteren Einfüllen des Klebstoffs 31 in den Klebraum 33 über Einlaufschrägen 42. Die Einlaufschrägen 42 liegen so, daß in den Einfülltrichter 35 eingefüllter Klebstoff über die Einlaufschräge 42 in den Kleberaum 33 läuft.

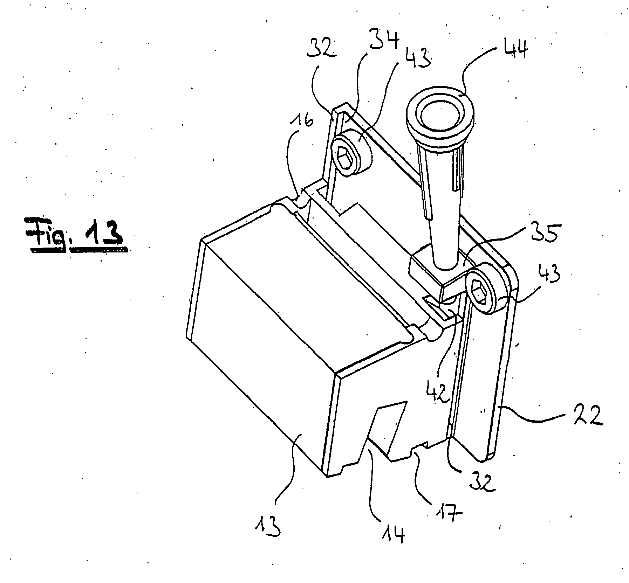

Diesen Vorgang zeigt Figur 13, in der die Montageplatte 22 über Schrauben 42 am (nicht dargestellten) Maschinenteil 21 befestigt dargestellt ist. In den Einfülltrichter 35 ist eine Tülle 44 eingesteckt, die dazu dient, Klebstoff über die Einlaufschräge 42 in den Kleberaum 33 zur Verklebung des Abtastkopfes 13 mit der Montageplatte 22 einzubringen. Der U-förmig umlaufende Rand 32 der Montageplatte 22, der in die Aussparung 40 an der Montagefläche 15 des Abtastkopfes 13 einsteht, ist gewährleistet, daß der eingebrachte Klebstoff nicht aus dem Kleberaum 33 nach unten oder seitlich austreten kann.

In der geschilderten Ausführungsform ist der Abtastkopf 13 während der Verklebung durch das Kapselprofil 2 in der justieren Stellung zum (nicht dargestellten) Maschinenteil 21 gesichert. Das Kapselprofil 2 ist jedoch der besseren Übersichtlichkeit halber in Figur 13 nicht dargestellt.

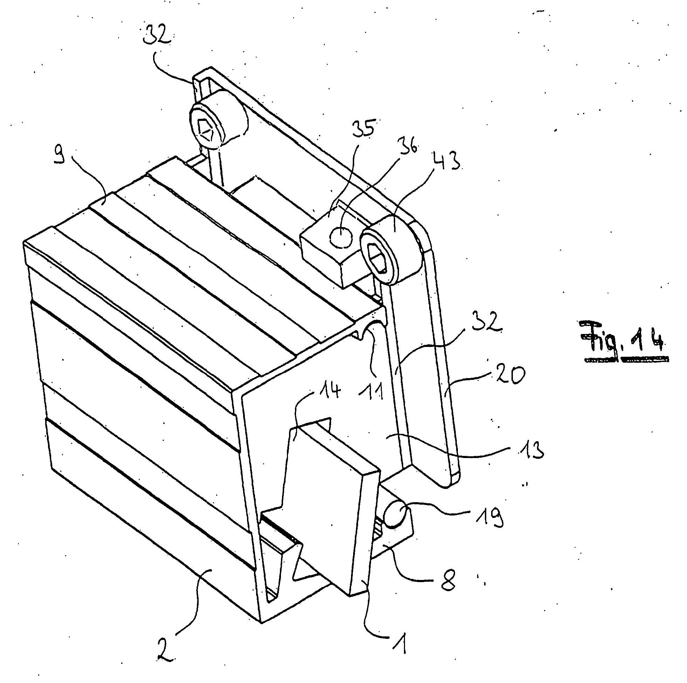

Figur 14 zeigt den Zustand nach der Verklebung kurz vor Abschluß der Endmontage, wobei nun das Kapselprofil 2 samt Maßstab 1 dargestellt ist. Wie zu sehen ist, steht der Abtastkopf 13 tief in das Kapselprofil 2 ein. Der Abtastkopf 14 umgreift den Maßstab 1 dreiseitig, ohne an diesem anzuliegen oder sich abzustützen, wenn die Endmontage abgeschlossen ist, also die Paßstücke abgenommen wurden. Der obere Paßzylinder 18 ist in Figur 14 bereits aus der oberen Haltenut 11 und der (in der Darstellung verdeckten) oberen Nut 16 des Abtastkopfes 13 herausgezogen, der untere Paßzylinder 19 jedoch noch nicht. Nach Entnahme des unteren Paßzylinders 19 aus der unteren Haltenut 12 und der unteren Nut 17 ist der am Maschinenkopf 21 befestigte Abtastkopf 14 frei entlang des Maßstabs 1 beweglich, wobei der Bewegungsverlauf durch die Bewegung des Maschinenkopfs 21 vorgegeben ist. Für den Fall, daß der Abtastkopf 13 vom Maschinenkopf 21 gelöst werden soll, können die Schrauben 43 ausgedreht werden, wodurch der Abtastkopf 13 samt der Montageplatte 22 vom Maschinenkopf 21 abnehmbar ist.

## Patentansprüche

1. Längenmeßsystem zum Messen von Relativbewegungen zwischen einem ersten und einem zweiten Maschinenteil (21, 28), mit einem Abtastkopf (13) und einem davon abgefühlten Maßstab (1), wobei in einer Endmontage des Längenmeßsystems der Abtastkopf (13) fest am ersten Maschinenteil (21) anbringbar und der Maßstab (1) mit dem zweiten Maschinenteil (28) verbindbar ist und der Maßstab (1) von einem Profilteil (2) getragen und in der Endmontage fest am zweiten Maschinenteil (28) anbringbar ist, wobei
das Längenmeßsystem eine Montagelehre (20) aufweist, mit der das Profilteil (2) unter Relativbewegung von erstem und zweitem Maschinenteil (21, 28) und gleichzeitigem Anlegen der Montagelehre (20) an das Profilteil (2) in einem vorbestimmten Abstand (D) zum ersten Maschinenteil (21) und entlang der Längsachse der Relativbewegung ausrichtbar ist, und wobei
das Längenmeßsystem weiterhin ein Montageelement (18, 19) aufweist, das während der Ausrichtung eine starre Verbindung zwischen dem Abtastkopf (13) und dem Profilteil (2) in einem vorjustierten Zustand sicherstellt, die unter Beibehaltung des vorjustierten Zustandes nach erfolgter Ausrichtung lösbar ist.

2. Längenmeßsystem nach Anspruch 1, **dadurch gekennzeichnet, daß** die Montagelehre (20) einen Einstellarm (26) aufweist, der zwischen dem Profilteil (2) und dem ersten Maschinenteil (21) liegt und den vorbestimmten Abstand (D) einstellt.

3. Längenmeßsystem nach Anspruch 2, **dadurch gekennzeichnet, daß** die Montagelehre (20) im Querschnitt U-förmig ist, einen dem Einstellarm (26) gegenüberliegenden ersten Referenzarm (24), der an seiner dem Profilteil (2) zugewandten Seite eine Referenzfläche (25) hat, die zur Anlage außen am Profilteil (2) auf Höhe des Maßstabes (1) ausgebildet ist, und einen den ersten Referenzarm (24) mit dem Einstellarm (26) verbindenden zweiten Referenzarm (23) aufweist, an dessen dem Profilteil (2) zugewandter Innenseite eine Auflagefläche (27) gebildet ist, die zur Auflage auf einen Deckel (9) des Profilteils (2) ausgebildet ist, so daß bei über das Profilteil (2) gelegter Montagelehre (20) der Einstellarm (26) zum Einstehen zwischen den freien Enden des Profilteils (2) und dem ersten Maschinenteil (21) ausgebildet ist.

4. Verfahren zur Endmontage eines Längenmeßsystems nach Anspruch 1 oder 2, **dadurch gekennzeichnet, daß** zur Endmontage das Profilteil (2) zum zweiten Maschinenteil (28) mittels einer Montagelehre (20) in vorbestimmten Abstand (D) ausgerichtet wird, wobei die Montagelehre (20) an das Profilteil (2) und das erste Maschinenteil (21) angelegt und das Profilteil (20) durch Relativbewegung von erstem und zweitem Maschinenteil (21, 28) entlang der Längsachse der Relativbewegung ausgerichtet wird, und wobei während der Ausrichtung ein Montageelement (18, 19) eine starre Verbindung zwischen dem Abtastkopf (13) und dem Profilteil (2) in einem vorjustierten Zustand sicherstellt, die unter Beibehaltung des vorjustierten Zustandes nach erfolgter Ausrichtung gelöst wird.

5. Verfahren nach Anspruch 4, **dadurch gekennzeichnet, daß** das Profilteil (2) zur Längsachse der Relativbewegung grob ausgerichtet wird und dann mittels der Montagelehre (20) in entlang der Längsachse konstantem Abstand (D) zum ersten Maschinenteil (21) justiert wird.

6. Verfahren nach Anspruch 5, **dadurch gekennzeichnet, daß** das Profilteil (2) nach der Grobausrichtung vorfixiert und nach der Justierung endbefestigt wird.

7. Verfahren nach Anspruch 4, 5 oder6, **dadurch gekennzeichnet, daß** mit der Montagelehre (20) ein Abstand (D) eingestellt wird, der einen vorbestimmten Spalt zwischen erstem Maschinenteil (21) und Abtastkopf (13) vor der Anbringung des Abtastkopfes (13) am ersten Maschinenteil (28) zur Folge hat.

8. Verfahren nach einem der Ansprüche 4 bis 7, **dadurch gekennzeichnet, daß** der Abtastkopf (13) und/oder das Profilteil (2) auf das jeweilige Maschinenteil (21, 28) geklebt werden.

## Claims

1. Length measuring system for measuring relative movements between a first and a second machine part (21, 28), having a sensing head (13) and a scale (1) sensed thereby, where, when the length measuring system is finally mounted, the sensing head (13) can be fitted firmly to the first machine part (21) and the scale (1) can be connected to the second machine part (28), and the scale (1) is carried by a profile part (2) and, when finally mounted, can be fitted firmly to the second machine part (28),
the length measuring system having a mounting gauge (20), with which, with relative movement of first and second machine part (21, 28) and simultaneous placement of the mounting gauge (20) on the profile part (2), the profile part (2) can be aligned at a predetermined distance (D) from the first machine part (21) and along the longitudinal axis of the relative movement, and the length measuring system further having a mounting element (18, 19) which, during the alignment, ensures a rigid connection between the sensing head (13) and the profile part (2) in a pre-adjusted state, which connection can be released after alignment has been carried out, whilst maintaining the pre-adjusted state.

2. Length measuring system according to Claim 1, **characterized in that** the mounting gauge (20) has a setting arm (26), which is located between the profile part (2) and the first machine part (21) and sets the predetermined distance (D).

3. Length measuring system according to Claim 2, **characterized in that** the mounting gauge (20) is U-shaped in cross section, has a first reference arm (24) which is located opposite the setting arm (26) and, on its side facing the profile part (2), has a reference face (25) which is designed for contact with the outside of the profile part (2) at the height of the scale (1), and a second reference arm (23) which connects the first reference arm (24) to the setting arm (26) and on the inner side of which, facing the profile part (2), there is formed a contact surface (27), which is designed for contact with a cover (9) of the profile part (2), so that when the mounting gauge (20) is laid over the profile part (2), the setting arm (26) is designed to stand between the free ends of the profile part (26) and the first machine part (21).

4. Method for the final mounting of a length measuring system according to Claim 1 or 2, **characterized in that**, for the purpose of final mounting, the profile part (2) is aligned with respect to the second machine part (28) at a predetermined distance (D) by means of a mounting gauge (20), the mounting gauge (20) being placed on the profile part (2) and the first machine part (21) and, by means of relative movement of first and second machine part (21, 28), the profile part (2) being aligned along the longitudinal axis of the relative movement, and, during the alignment, a mounting element (18, 19) ensuring a rigid connection between the sensing head (13) and the profile part (2) in a pre-adjusted state, which connection can be released after alignment has been carried out, whilst maintaining the pre-adjusted state.

5. Method according to Claim 4, **characterized in that** the profile part (2) is aligned roughly with the longitudinal axis of the movement and then, by means of the mounting gauge (20), is adjusted along the longitudinal axis at a constant distance (D) with respect to the first machine part (21).

6. Method according to Claim 5, **characterized in that** the profile part (2) is pre-fixed after the coarse alignment and finally fixed following the adjustment.

7. Method according to Claim 4, 5 or 6, **characterized in that** the mounting gauge (20) is used to set a distance (D) which results in a predetermined gap between first machine part (21) and sensing head (13) before the fitting of the sensing head (13) to the first machine part (28).

8. Method according to one of Claims 4 to 7, **characterized in that** the sensing head (13) and/or the profile part (2) is/are adhesively bonded to the respective machine part (21, 28).

## Revendications

1. Système de mesure de longueur pour mesurer des mouvements relatifs entre une première et une deuxième partie de machine (21, 28), comprenant une tête de balayage (13) et une échelle de mesure (1) balayée par celle-ci, la tête de balayage (13) pouvant être montée fixement sur la première partie de machine (21) dans un montage final du système de mesure de longueur et l'échelle de mesure (1) pouvant être connectée à la deuxième partie de machine (28) et l'échelle de mesure (1) étant portée par une partie profilée (2) et pouvant être montée fixement sur la deuxième partie de machine (28) dans le montage final,
le système de mesure de longueur présentant un gabarit de montage (20) avec lequel la partie profilée (2) peut être orientée par mouvement relatif de la première et de la deuxième partie de machine (21, 28) et application simultanée du gabarit de montage (20) contre la partie profilée (2) à une distance prédéterminée (D) par rapport à la première partie de machine (21) et le long de l'axe longitudinal du mouvement relatif, et
le système de mesure de longueur présentant en outre un élément de montage (18, 19) qui, pendant l'orientation, garantit une connexion rigide entre la tête de balayage (13) et la partie profilée (2) dans un état préajusté, ladite connexion rigide pouvant être desserrée après l'orientation correcte en conservant l'état préajusté.

2. Système de mesure de longueur selon la revendication 1, **caractérisé en ce que** le gabarit de montage (20) présente un bras d'ajustement (26), qui est situé entre la partie profilée (2) et la première partie de machine (21) et qui ajuste la distance prédéterminée (D).

3. Système de mesure de longueur selon la revendication 2, **caractérisé en ce que** le gabarit de montage (20) a une section transversale en forme de U, présente un premier bras de référence (24) opposé au bras d'ajustement (26), qui dispose d'une surface de référence (25) sur son côté tourné vers la partie profilée (2), laquelle surface de référence est réalisée de manière à s'appliquer à l'extérieur contre la partie profilée (2) à hauteur de l'échelle de mesure (1), et un deuxième bras de référence (23) reliant le premier bras de référence (24) au bras d'ajustement (26), au niveau du côté intérieur duquel deuxième bras de référence, tourné vers la partie profilée (2), est formée une surface d'appui (27) qui est formée de manière à s'appuyer sur un couvercle (g) de la partie profilée (2), de telle sorte que lorsque le gabarit de montage (20) est monté sur la partie profilée (2), le bras d'ajustement (26) soit réalisé de manière à se situer entre les extrémités libres de la partie profilée (2) et de la première partie de machine (21).

4. Procédé pour le montage final d'un système de mesure de longueur selon la revendication 1 ou 2, **caractérisé en ce que** pour le montage final, la partie profilée (2) est orientée par rapport à la deuxième partie de machine (28) au moyen d'un gabarit de montage (20) à une distance prédéterminée (D), le gabarit de montage (20) s'appliquant contre la partie profilée (2) et la première partie de machine (21), et la partie profilée (20) étant orientée par mouvement relatif de la première et de la deuxième partie de machine (21, 28) le long de l'axe longitudinal du mouvement relatif, et pendant l'orientation, un élément de montage (18, 19) garantissant une connexion rigide entre la tête de balayage (13) et la partie profilée (2) dans un état préajusté, laquelle connexion rigide est desserrée après l'orientation correcte en conservant l'état préajusté.

5. Procédé selon la revendication 4, **caractérisé en ce que** la partie profilée (2) est orientée grossièrement par rapport à l'axe longitudinal du mouvement relatif et ensuite est ajustée au moyen du gabarit de montage (20) à la distance constante (D) le long de l'axe longitudinal par rapport à la première partie de machine (21).

6. Procédé selon la revendication 5, **caractérisé en ce que** la partie profilée (2) est préfixée après l'orientation grossière et est fixée de manière définitive après l'ajustement.

7. Procédé selon la revendication 4, 5 ou 6, **caractérisé en ce que** le gabarit de montage (20) permet d'ajuster une distance (D) qui produit un espacement prédéterminé entre la première partie de machine (21) et la tête de balayage (13) avant le montage de la tête de balayage (13) sur la première partie de machine (28).

8. Procédé selon l'une quelconque des revendications 4 à 7, **caractérisé en ce que** la tête de balayage (13) et/ou la partie profilée (2) sont collées sur la partie de machine respective (21, 28).
